# DEMANDE DE BREVET EUROPEEN

(11) **EP 1 600 847 A1**
(43) Date de publication de la demande: **30.11.2005**
(21) Numéro de dépôt: 05291051.0
(22) Date de dépôt: 17.05.2005
(51) Int. Cl.: G06F 3/023, G06F 3/033, G07F 7/10

(54) **Dispositif universel de saisie confidentielle**

(30) Priorité: 17.05.2004 FR 0405343
(71) Demandeur: Merrouk, Ahmed, 91270 Vigneux sur Seine (FR)
(72) Inventeur: Merrouk, Ahmed, 91270 Vigneux sur Seine (FR); Hubert, Christian, 91000 Evry (FR)
(74) Mandataire: Pontet, Bernard

(57) **Abrégé**

Dispositif permettant la saisie confidentielle de codes composés de symboles. L'invention concerne un dispositif permettant de saisir un code en évitant que l'observation du déplacement des doigts ou l'observation de traces sur le clavier permette de reconstituer le code. Le dispositif est constitué d'un écran à affichage par cristaux liquides (1) affichant une zone clavier (2) dont l'ordre des symboles est défini de façon aléatoire et modifiable avant chaque saisie.

Une touche « mélange » sert à commander la modification du positionnement des symboles sur chaque touche du clavier.

Le dispositif selon l'invention est destiné à s'intégrer dans tous les dispositifs d'identification par code comme : les terminaux de paiement électronique, les systèmes de distribution automatique, les systèmes de contrôle d'accès de locaux ou de systèmes informatiques, de systèmes de protection par alarme..........

## Description

La présente invention concerne un dispositif permettant la saisie en toute confidentialité d'un code numérique, alphanumérique ou autres symboles.

La sécurité du système Cartes Bancaires (CB) progresse en France :
d'après une première estimation pour 2003, la fraude en paiement par carte CB représentera 69 millions d'euros en 2003 (0.034% du montant des paiements effectuées dans le système CB) contre 75 millions en 2002 (0.041% du montant des paiements).

Néanmoins, on assiste à la forte augmentation des opérations frauduleuses à l'étranger, grâce à la copie des pistes magnétiques des cartes bancaires, le plus souvent sur des automates, ces cartes étant par la suite utilisées à l'étranger. En un an, le montant de ces escroqueries est passé de 45 millions à 79 millions d'euros.

Pour faire face à cette situation, un programme de contrôle quotidien et systématique de tous les Distributeurs Automatiques de Billets et des automates de stations-service de distribution de carburant a été lancé. Ce plan a fait l'objet d'une concertation avec les banques, le commerce, ainsi qu'avec la police qui a déjà procédé à de nombreuses arrestations dans ce domaine.

La communauté bancaire CB entend ainsi continuer à investir et conserver son avance en matière de sécurité des paiements par carte, ceci afin de maintenir un très haut niveau de confiance des consommateurs. Le nombre des paiements par carte CB dépasse depuis le début 2003 celui des paiements par chèque et les consommateurs sont de plus en plus nombreux à préférer les paiements par carte CB aux paiements par chèques.

Selon un sondage Sofrès, la confiance dans la carte bancaire reste forte avec un taux de satisfaction de 97% (enquête réalisée en septembre 2003 auprès de 935 porteurs de cartes bancaires âgés de 18 ans et plus). D'après ce même sondage, près de 9 sur 10 ont une carte CB et celle-ci est le moyen de paiement préféré pour 69% d'entre eux, contre 17% pour le chèque et 13% pour les espèces.

Ainsi, il apparaît essentiel de commercialiser sur le marché un dispositif simple et fiable permettant de sécuriser la saisie des codes utilisés notamment pour les transactions au moyen de cartes bancaires à puce.

La saisie d'un code confidentiel, par exemple dans un distributeur automatique de billets, est traditionnellement effectuée à l'aide d'un clavier dont la position des symboles est figée.

La position desdits symboles peut être connue lors de la saisie par d'autres personnes que la personne qui compose le code dans la mesure où des regards indiscrets peuvent facilement déterminer l'ordre de saisie du code par l'observation du déplacement des doigts sur le clavier ou même par observation du clavier après saisie des touches utilisées (traces ou différences de chaleur).Les documents WO 98 27 518 A, FR 28 19 067 A et DE 41 29 202 A1 décrivent les dispositifs qui configurent de façon variable le clavier de saisie, automatiquement pour chaque utilisation. Ces dispositifs ne semblent pas avoir trouvé d'application pratique.

L'idée qui est à la base de l'invention est que les exploitants redoutent que la variation de la configuration rebute certains utilisateurs.

Le dispositif selon l'invention permet de remédier à cet inconvénient en sécurisant la saisie du code confidentiel.

Il comporte en effet selon une première caractéristique, une zone de clavier dont la configuration géométrique ou positionnement des symboles n'est pas figée. Ainsi, au moment de la saisie, le positionnement des symboles s'obtient de façon aléatoire. Cet arrangement géométrique ne peut donc être connu que de la personne qui compose le code confidentiel. Après la saisie, la configuration des symboles est de nouveau modifiée. Un moyen de commande de mélange permet de commander la modification de l'emplacement des symboles.

L'observation du déplacement des doigts ne peut pas permettre de reconstituer le code confidentiel. Le dispositif objet de la présente demande, avec sa génération aléatoire de code, peut remplacer tout clavier classique dans tous les systèmes où une saisie confidentielle est nécessaire.

### Selon des modes de réalisation particuliers:

La zone de clavier peut être constituée d'un écran tactile ou d'un clavier dont les touches sont équipées d'un afficheur capable d'afficher différents symboles.

La zone de clavier peut être complétée par des touches de fonctions telles que Validation, Correction, Annulation ou Mélange, cette dernière touche permettant une modification de l'emplacement des symboles en cours de saisie. Dès la fin de l'opération menée par un utilisateur, par exemple un retrait d'espèces dans un distributeur automatique de billet, le clavier revient de préférence à la configuration standard. L'utilisateur suivant compose son code sur le clavier en configuration standard ou bien, au choix, active la touche « Mélange » pour obtenir une configuration aléatoire et composer son code sur cette dernière. La touche « Mélange » permet donc l'utilisation du clavier par des utilisateurs qui sont incapables de se rappeler leur code autrement qu'avec un clavier en configuration standard (« Mémoire des doigts »). Même pour ces utilisateurs, la fraude est rendue plus difficile, car l'observateur frauduleux peut difficilement savoir si la fonction « Mélange » a été activée ou non.

La zone de clavier disposera d'une interface électronique programmable qui va de préférence générer, à la demande, de façon aléatoire, la position des touches et qui ensuite enregistrera le code frappé pour l'envoyer vers l'ordinateur hôte selon une connectique standard des dispositifs de saisie de codes secrets. Cette zone de clavier bidirectionnelle suivie de son composant électronique constituera un ensemble pouvant remplacer tout dispositif classique de saisie grâce à sa fonction caractéristique de programmation.

L'utilisation d'un écran tactile permet de regrouper l'affichage d'information, le clavier, et les touches de fonctions sur un seul sous-ensemble.

La zone de clavier peut comporter un nombre quelconque de touches, 10 dans le cas d'un clavier numérique, 26 dans le cas d'un clavier alphabétique, 36 pour un clavier alphanumérique etc..

Un filtre optique peut être inséré entre l'écran et le dispositif tactile afin de limiter la zone de visibilité des symboles.

L'ensemble du dispositif clavier, affichage, et électronique de gestion peut être intégré dans un seul boîtier.

Dans le cas d'un écran tactile à affichage par cristaux liquides celui-ci peut être complété par un dispositif d'éclairage arrière, permettant une saisie dans un endroit sombre.

### Les dessins annexés illustrent l'invention :

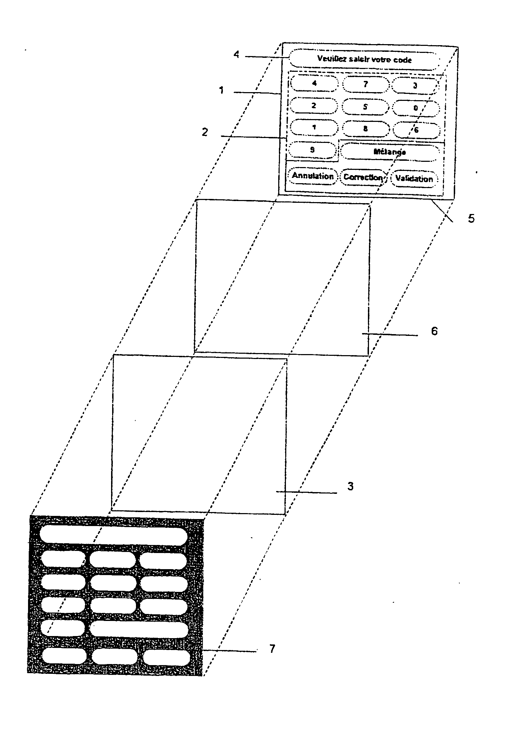

La figure 1 représente un mode de réalisation du dispositif selon l'invention, en vue éclatée.

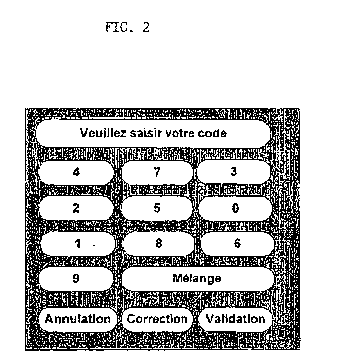

La figure 2 représente le dispositif de la figure 1, en vue de face.

Ces deux figures illustrent un exemple de répartition aléatoire de symboles numériques.

En référence à ces dessins, le dispositif comporte un écran à cristaux liquides (1), dont une zone représente un clavier numérique dont l'ordre des symboles (2) est défini de façon aléatoire. L'écran comporte aussi une zone d'affichage de texte (4) permettant entre autre l'affichage de messages à l'attention de l'utilisateur.

Une zone à touches de fonction (5) permet l'adjonction de touches telles qu'annulation, correction, validation ou mélange.

Un filtre optique (6) est superposé à l'écran afin de réduire l'angle de visibilité des symboles.

Un dispositif de détection tactile (3) transparent est superposé au filtre et à l'écran afin de détecter le choix de l'utilisateur.

Une grille (7) séparant les différentes zones est superposée au dispositif de détection tactile afin de bien délimiter les différentes zones.

En service, à un certain stade de l'opération après qu'un utilisateur a introduit sa carte bancaire, un message apparaît sur la zone d'affichage de texte (4) pour proposer à l'utilisateur de modifier la configuration du clavier en appuyant sur la touche « Mélange ».

En variante, le message peut proposer le mélange sous forme de question, à laquelle on répond par « oui » en appuyant sur une touche déterminée, par exemple la touche « validation », ou par « non » en appuyant sur une autre touche déterminée, par exemple la touche « correction ». Dans ce mode de réalisation, il n'y a pas de touche spécifique « Mélange ».

Selon un perfectionnement, il est possible que les touches à utiliser pour répondre par « oui » ou par « non » à la proposition de mélange soient changées aléatoirement et automatiquement à chaque opération. C'est la zone d'affichage du clavier, ou un écran, qui indique à l'utilisateur quelles touches utiliser pour répondre « oui » ou respectivement « non ». Par exemple, pour une utilisation, l'écran indique à l'utilisateur d'appuyer sur la touche « 8 » pour demander le mélange, ou sur la touche « 2 » pour le refuser. A l'utilisateur suivant, l'écran indiquera par exemple d'appuyer sur la touche « correction » pour demander le mélange, et sur la touche « 7 » pour le refuser.

Ainsi, les gestes effectués par l'utilisateur ne permettent pas à un fraudeur de savoir si l'écran a été mélangé ou non préalablement au codage.

Selon encore une autre variante, la commande de mélange pourrait être vocale, ce qui supprime tout geste visible.

L'invention est applicable dans d'autres domaines que les appareils de paiement ou de retrait d'espèces.

Elle est par exemple utilisable sur les appareils de contrôle d'accès à clavier de saisie de code secret.

## Revendications

1. Dispositif permettant la saisie confidentielle de codes constitués de symboles numériques, alphanumériques ou analogues, comprenant pour saisir le code une zone de clavier (2), dont la configuration des symboles de touche est variable, **caractérisé en ce qu'**il comprend en outre un moyen de commande de mélange pour commander la modification de l'emplacement des symboles.

2. Dispositif selon la revendication 1, **caractérisé en ce que** la zone de clavier comprend au moins une touche de fonction (5).

3. Dispositif selon la revendication 1, **caractérisé en ce que** le moyen de commande de mélange est une touche appartenant de préférence à la zone du clavier.

4. Dispositif selon l'une des revendications 1 à 3, **caractérisé en ce que** la zone de clavier (2) appartient à un écran tel qu'à cristaux liquides (1) qui peut afficher dans la zone de clavier (2) les différents symboles de touche dans un ordre aléatoire.

5. Dispositif selon la revendication 4, **caractérisé en ce qu'**il comprend en outre un dispositif de filtre optique (6) permettant de réduire l'angle de visibilité des symboles.

6. Dispositif selon la revendication 4 ou 5, **caractérisé en ce qu'**il comprend un dispositif tactile (3) superposé audit écran à cristaux liquides (1) permettant de détecter les symboles de touche saisis par l'utilisateur.

7. Dispositif selon l'une quelconque des revendications 4 à 6, **caractérisé en ce que** l'écran à cristaux liquides comprend une zone d'affichage de texte (4).

8. Dispositif selon l'une quelconque des revendications 4 à 7, **caractérisé en ce qu'**une grille (7) séparant les différentes régions ainsi que les différentes cases du clavier est superposée audit écran pour délimiter les différentes régions du clavier.

9. Dispositif selon l'une des revendications 1 à 3, **caractérisé par** l'utilisation de touches dont la surface supérieure est pourvue d'un afficheur électronique permettant l'affichage de différents symboles.

10. Application du dispositif selon l'une des revendications 1 à 9 à des digicodes pour distributeur de billets de banque.
